# EUROPEAN PATENT APPLICATION

(11) **EP 4 800 471 A1**
(43) Date of publication of application: **02.09.2026**
(21) Application number: 24882792.5
(22) Date of filing: 23.10.2024
(51) Int. Cl.: G03B 9/06, G03B 30/00, H04N 23/54, H04N 23/55, H04N 23/57, G03B 5/00, H04N 23/53

(54) **APERTURE DEVICE, CAMERA DEVICE, AND OPTICAL DEVICE**

(30) Priority: 24.10.2023 KR 20230143372; 24.10.2023 KR 20230143374; 11.09.2024 KR 20240124225; 11.09.2024 KR 20240124226
(71) Applicant: LG Innotek Co., Ltd., Seoul 07796 (KR)
(72) Inventor: YU, Hyun Soo, Seoul 07796 (KR); BAE, Seok, Seoul 07796 (KR)
(74) Representative: Plasseraud IP
(86) International application number: PCT/KR2024/016125
(87) International publication number: WO 2025/089765

(57) **Abstract**

An aperture device according to an embodiment of the present invention comprises: a fixed assembly comprising a first driving unit; a movable assembly comprising a second driving unit; a blade unit coupled to the fixed and movable assemblies; and balls disposed between the fixed and movable assemblies.

## Description

### [Technical Field]

The present embodiment relates to an aperture device, a camera device, and an optical device.

### [Background Art]

Recent smartphones are equipped with cameras capable of capturing high-resolution photographs and videos.

In particular, recent smartphone cameras offer a variety of features, such as autofocus, image stabilization, and zoom, which have provided high user satisfaction.

However, conventional smartphone cameras suffer from performance limitations in dark environments. This can lead to images captured in low-light conditions being noisy and lacking clarity.

### [Disclosure]

### [Technical Problem]

An object of the present embodiment is to provide a camera device that can be used without performance limitations even in dark environments. Furthermore, an object of the present embodiment is to provide an aperture device for the camera device described above.

### [Technical Solution]

To solve the above technical problem, an aperture device according to an embodiment of the present disclosure includes: a fixed assembly including a first driving part; a moving assembly including a second driving part; a blade part coupled to the fixed assembly and the moving assembly; and a ball disposed between the fixed assembly and the moving assembly.

The aperture device may further include a first cover member disposed on the fixed assembly and a first guide member disposed on the inner side of the first cover member, wherein the first guide member may include a first guide groove in which the ball is disposed.

The fixed assembly may include a second guide member disposed below the first guide member, in which the second guide member may include a second guide groove in which the ball is disposed.

The moving assembly may include a plurality of magnets and a magnet support member in which the plurality of magnets are spaced apart, and may include a third guide groove in which the ball is disposed on the outer surface of the magnet support member.

The first driving part may include a coil and a substrate connected to the coil.

The aperture device may include a sensor disposed on the coil, and the sensor may be electrically connected to the substrate.

The fixed assembly may include a housing on which the blade part is disposed, the housing may include a first protrusion inserted into a first hole of the blade part, and the magnet support member may include a second protrusion inserted into a second hole of the blade part.

The first hole may be formed in a circular shape, and the second hole may be formed in an elliptical shape.

The blade part may include an escape groove having a radius of curvature larger than the radius of curvature of the second hole.

The blade part may include six blades, three of the six blades may be disposed on the first layer, and the remaining three blades may be disposed on the second layer below the first layer.

To solve the above technical problem, an aperture device according to an embodiment of the present disclosure includes a fixed assembly including a coil; a moving assembly including a magnet; a blade part coupled to the fixed assembly and the moving assembly; and a ball disposed between the fixed assembly and the moving assembly, in which the coil and the magnet may overlap in the direction of the optical axis direction.

The fixed assembly may include a plurality of first protrusions inserted into a first hole of the blade part and spaced apart from each other along the peripheral direction, and the moving assembly may include a plurality of second protrusions inserted into a second hole of the blade part and spaced apart from each other along the peripheral direction.

The size of the first hole of the blade part may be larger than the size of the second hole.

The magnet may include a plurality of magnets spaced apart from each other, and the moving assembly may include a magnet support member on which the plurality of magnets are spaced apart.

The aperture device may further include a first cover member disposed on the fixed assembly and the moving assembly, and a second cover member disposed on the upper surface of the moving assembly, in which the second cover member may be shielded with a shielding coating.

To solve the above technical problem, a camera device according to an embodiment of the present disclosure includes a printed circuit board; an image sensor disposed on the printed circuit board; a lens disposed on the image sensor; and an aperture device disposed on the lens.

To solve the above technical problem, an optical device according to an embodiment of the present disclosure includes a main body; a camera device disposed on the main body; and a display disposed on the main body and outputting one or more of a video and an image captured by the camera device.

To solve the above technical problem, an aperture device according to an embodiment of the present disclosure includes a fixed assembly including a first driving part; a moving assembly including a second driving part; a blade part coupled to the fixed assembly and the moving assembly; and a ball disposed between the fixed assembly and the moving assembly, in which the inner surface of the blade includes a circular arc area and a flat area.

The circular arc area having the smallest radius of curvature among the inner peripheral surface of the blade may be connected to the flat area.

The area having the largest length in the longitudinal direction of the inner peripheral surface of the blade may be connected to the flat area.

The inner peripheral surface of the blade may include a first circular arc area, a second circular arc area, a flat area, a third circular arc area, and a fourth circular arc area from one direction to the other direction.

The first to fourth circular arc areas have a first to fourth radius of curvature, respectively, and the first to fourth radii of curvature may be different from each other.

The first to fourth circular arc areas have a first to fourth radius of curvature, respectively, and among the first to fourth radii of curvature, the second radius of curvature may be the smallest.

The first to fourth circular arc areas each have a first to fourth radius of curvature, and among the first to fourth radii of curvature, the fourth radius of curvature may be the largest.

The first radius of curvature of the first circular arc area may be larger than the second radius of curvature of the second circular arc area and smaller than the third radius of curvature of the third circular arc area.

The third radius of curvature of the third circular arc area may be larger than the first radius of curvature of the first circular arc area and smaller than the fourth radius of curvature of the fourth circular arc area.

The blade part includes six blades, and among the six blades, three blades are placed on the first floor, and the remaining three blades may be placed on the second floor, which is below the first floor.

The fixed assembly may include a plurality of first protrusions inserted into a first hole of the blade part and spaced apart from each other along the peripheral direction, and the moving assembly may include a plurality of second protrusions inserted into a second hole of the blade part and spaced apart from each other along the peripheral direction.

The size of the first hole of the blade part may be larger than the size of the second hole.

The first hole may be formed in a circular shape, and the second hole may be formed in an elliptical shape.

The blade part may include an escape groove having a radius of curvature larger than the radius of curvature of the second hole.

The inner peripheral surface of the blade may include a first circular arc area, a second circular arc area, a flat area, a third circular arc area, and a fourth circular arc area from one direction to the other direction, in which the first circular arc area is disposed closer to the escape groove than the second hole, and the fourth circular arc area may be disposed closer to the second hole than the escape groove.

To solve the above technical problem, a camera device according to an embodiment of the present disclosure includes a printed circuit board; an image sensor disposed on the printed circuit board; a lens disposed on the image sensor; and an aperture device disposed on the lens.

To solve the above technical problem, an optical device according to an embodiment of the present disclosure includes a main body; a camera device disposed on the main body; and a display disposed on the main body and outputting one or more of a video and an image captured by the camera device.

### [Advantageous Effect]

This embodiment allows the use of a smartphone's camera function without performance limitations even in dark environments.

Furthermore, the magnet injection structure allows for the implementation of an ultra-thin rotor, preventing cracks and enhancing reliability.

Furthermore, by disposing the sensor within the coil, an ultra-thin aperture device can be implemented.

Furthermore, the aperture device included in the smartphone camera of this embodiment can have a circular or nearly circular shape through which light passes in a plurality of control steps.

This can minimize the phenomenon of light splitting caused by diffraction at the angled portions of the aperture blades.

### [Description of Drawings]

FIG. 1 is a perspective view illustrating an aperture device according to the present embodiment.
FIG. 2 is a perspective view illustrating an aperture device according to the present embodiment, viewed from another angle.
FIG. 3 is an exploded perspective view illustrating an aperture device according to the present embodiment.
FIG. 4 is an exploded perspective view illustrating an aperture device according to the present embodiment.
FIG. 5 is a cross-sectional view illustrating an aperture device according to the present embodiment.
FIG. 6 is a perspective view illustrating a first cover member and a first guide member according to the present embodiment.
FIG. 7 is a perspective view illustrating a first cover member and first and second guide members according to the present embodiment.
FIG. 8 is an enlarged cross-sectional view illustrating area A of FIG. 7.
FIG. 9 is an exploded perspective view illustrating a fixed assembly according to the present embodiment.
FIG. 10 is a perspective view illustrating a fixed assembly according to the present embodiment.
FIG. 11 is a cross-sectional view illustrating a coil according to the present embodiment, cut perpendicular to the optical axis.
FIG. 12 is an exploded perspective view illustrating a moving assembly according to the present embodiment.
FIG. 13 is a perspective view illustrating a magnet support member according to the present embodiment.
FIG. 14 is a perspective view illustrating a magnet support member according to the present embodiment, viewed from another angle.
FIG. 15 is a perspective view illustrating a blade part according to the present embodiment.
FIG. 16 is a perspective view illustrating a blade part according to the present embodiment, separated into two layers.
FIG. 17 is a view illustrating the rotational motion of a blade part according to the present embodiment.
FIGS. 18 and 19 are perspective views illustrating a blade part according to the present embodiment, viewed from different angles.
FIG. 20 is a view illustrating a blade hole of an aperture device according to the present embodiment.
FIG. 21 is a perspective view illustrating a fixed assembly, a blade part, and a magnet combined according to the present embodiment.
FIG. 22 is a perspective view illustrating a camera device according to the present embodiment.
FIG. 23 is a perspective view illustrating an optical device according to the present embodiment.

### [Best Mode]

Hereinafter, preferred embodiments of the present disclosure will be described in detail with reference to the attached drawings.

However, the technical idea of the present disclosure is not limited to some of the embodiments described, but can be implemented in various different forms, and within the scope of the technical idea of the present disclosure, one or more of the components between the embodiments can be selectively combined or substituted and used.

In addition, terms (including technical and scientific terms) used in the present embodiment can be interpreted as meanings that can be generally understood by a person having ordinary knowledge in the technical field to which the present embodiment belongs, unless explicitly and specifically defined and described, and terms that are commonly used, such as terms defined in a dictionary, can be interpreted in consideration of the contextual meaning of the related technology.

In addition, terms used in the present embodiment are used to describe the embodiments and are not intended to limit the present disclosure.

In this specification, the singular may also include the plural unless specifically stated otherwise in the phrase, and when it is described as "at least one (or one or more) of A, B, C", it may include one or more of all combinations that can be combined with A, B, C.

In addition, in describing components of the present embodiment, terms such as first, second, A, B, (a), (b), or the like may be used. These terms are only intended to distinguish the components from other components, and are not intended to limit the nature, order, or sequence of the components.

In addition, when a component is described as being 'connected', 'coupled', or 'accessed' to another component, it may include not only cases where the component is 'connected', 'coupled', or 'accessed' directly to the other component, but also cases where the component is 'connected', 'coupled', or 'accessed' by another component between the component and the other component.

In addition, when described as being formed or disposed "above" or "below" each component, "above" or "below" includes not only the case where the two components are in direct contact with each other, but also the case where one or more other components are formed or disposed between the two components. In addition, when expressed as "above" or "below", the meaning of the downward direction as well as the upward direction based on one component may be included.

The "optical axis direction" used below is defined as the optical axis direction of a lens and/or image sensor coupled to a lens driving device.

The "vertical direction" used below may be a direction parallel to or identical to the optical axis direction. The vertical direction may correspond to the "z-axis direction." The "horizontal direction" used below may be a direction perpendicular to the vertical direction. In other words, the horizontal direction may be a direction perpendicular to the optical axis. Therefore, the horizontal direction may include the "x-axis direction" and the "y-axis direction."

The 'auto focus (AF) function' used below is defined as a function that automatically focuses on a subject by adjusting the distance from the image sensor by moving the lens in the optical axis direction according to the distance of the subject so that a clear image of the subject can be obtained on the image sensor. In addition, 'closed-loop auto focus (CLAF) control' is defined as a function that detects the distance between the image sensor and the lens and provides feedback control of the position of the lens in real time to improve the accuracy of focus adjustment.

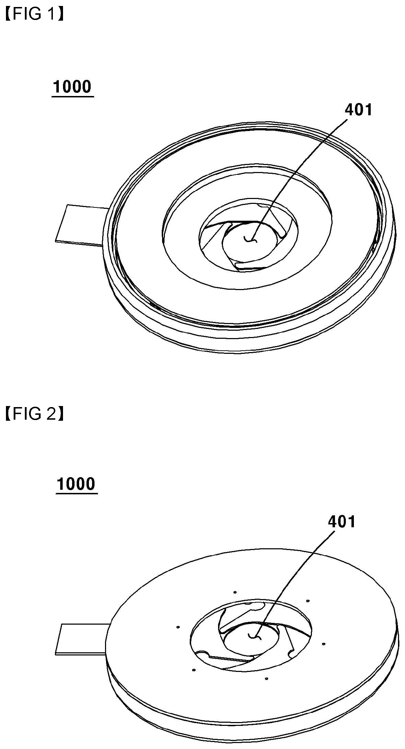

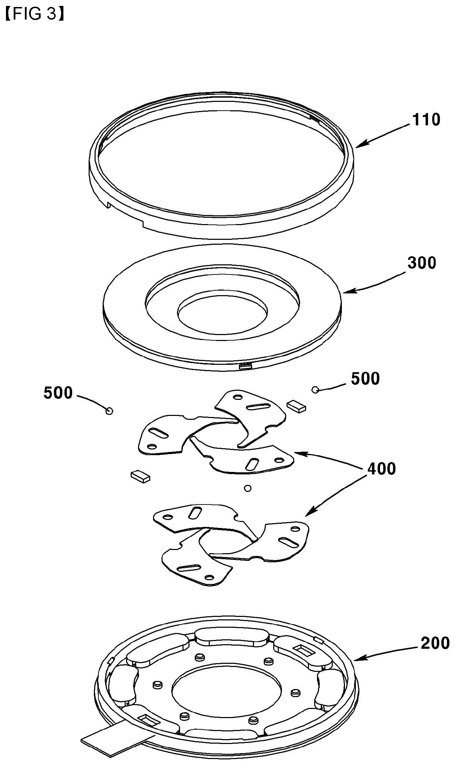

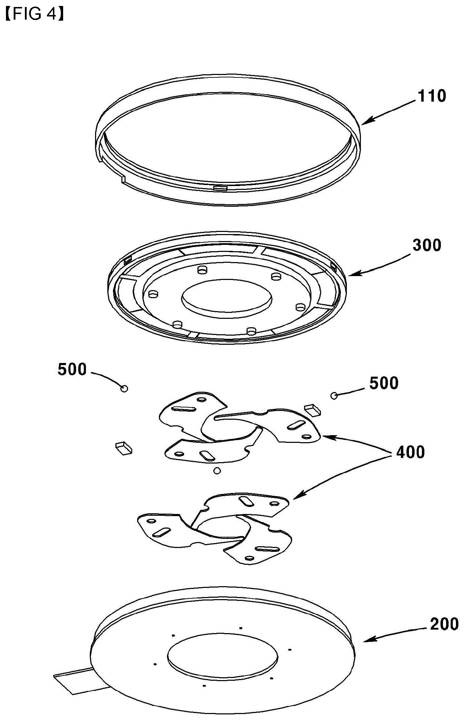

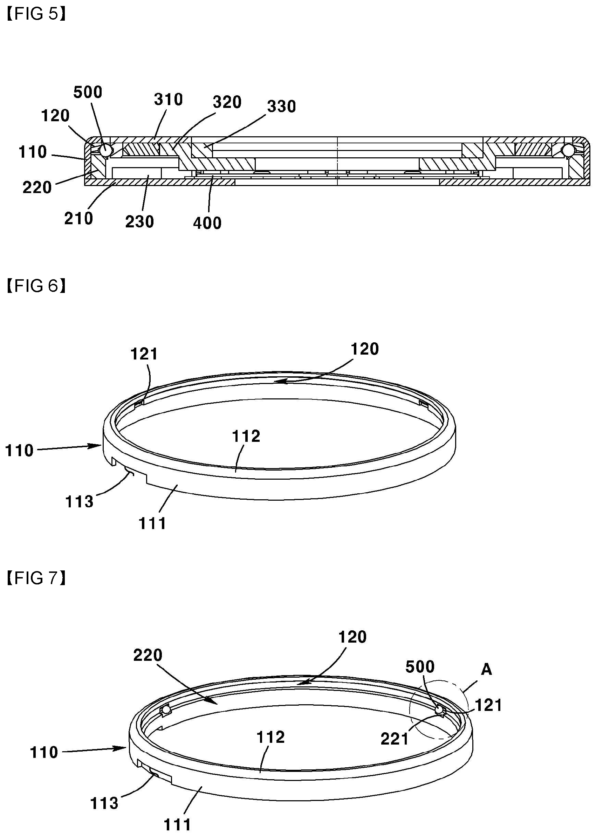

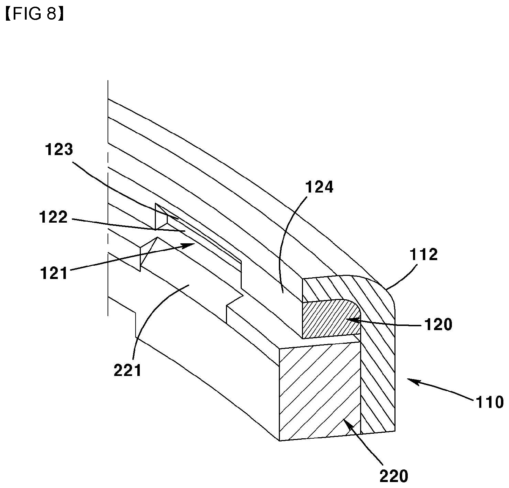

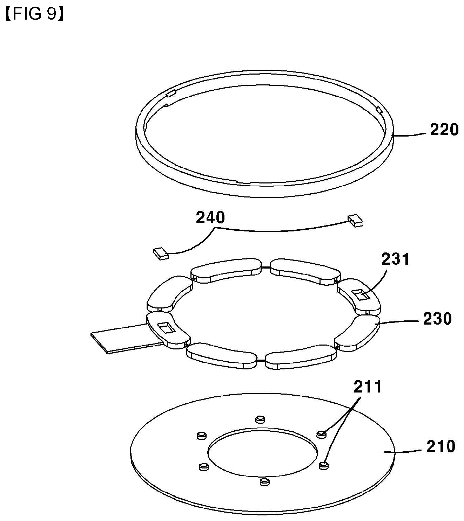

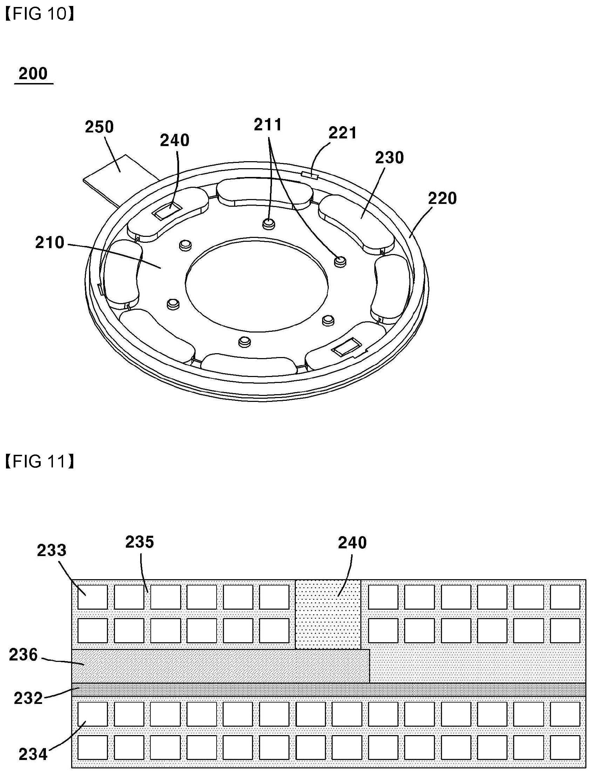

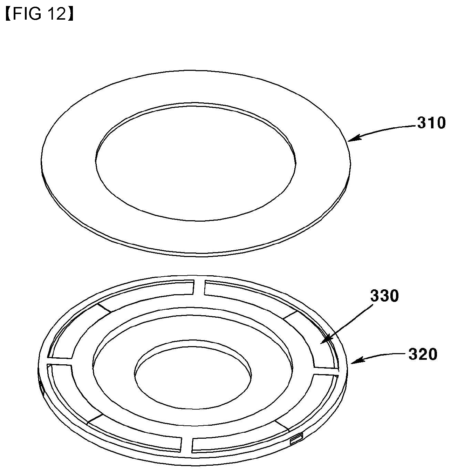

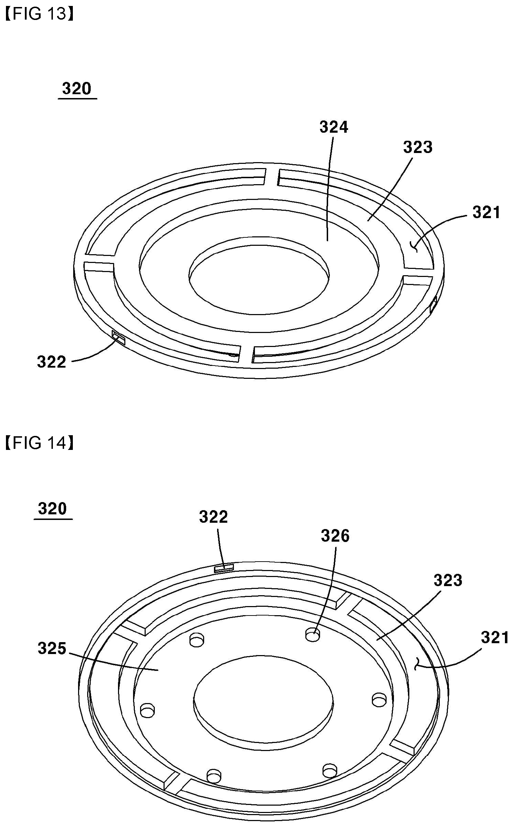

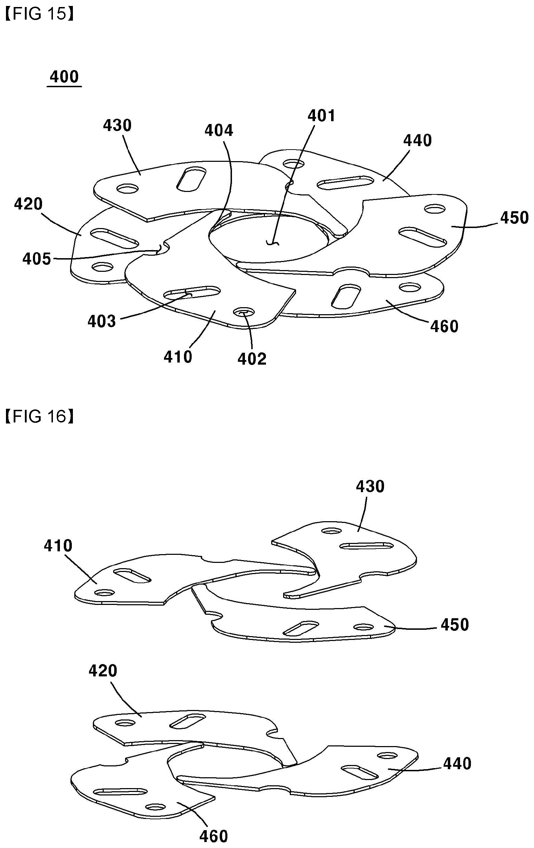

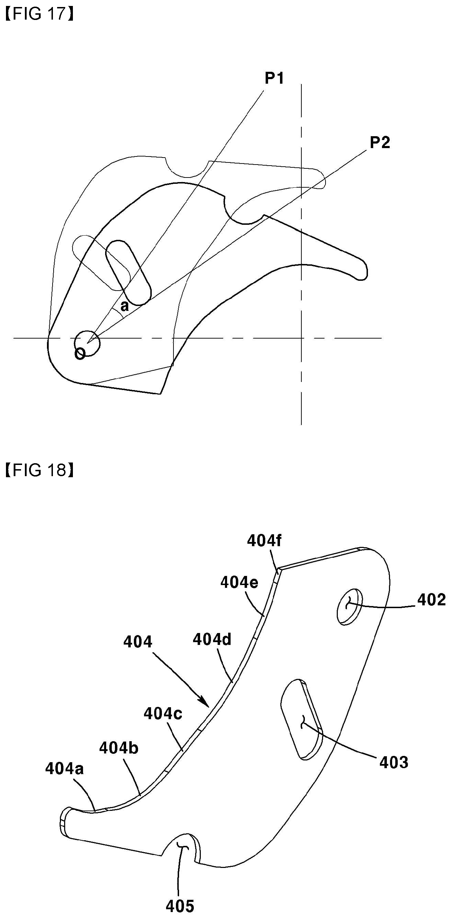

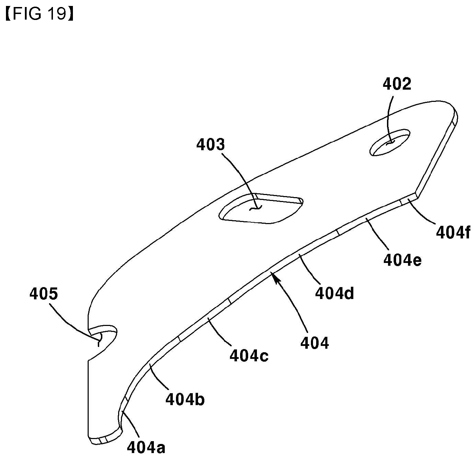

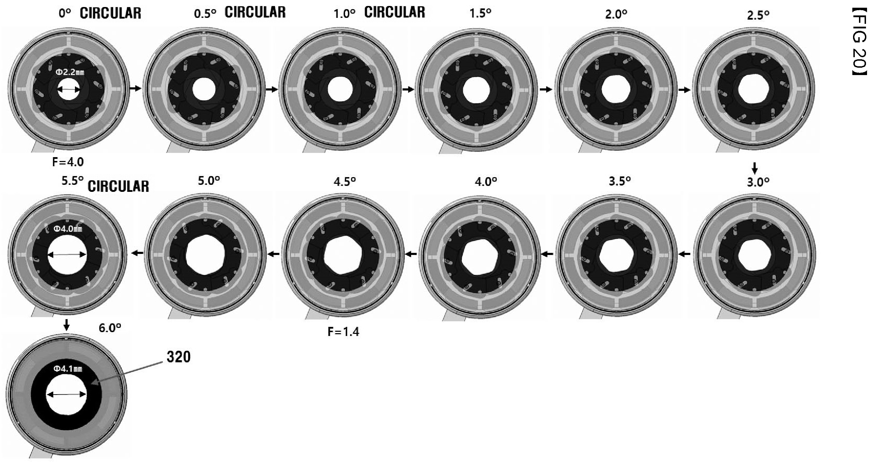

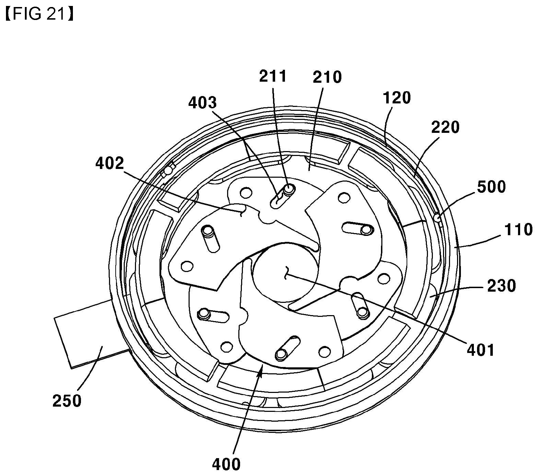

FIG. 1 is a perspective view illustrating an aperture device according to the present embodiment, FIG. 2 is a perspective view illustrating an aperture device according to the present embodiment, viewed from another angle, FIG. 3 is an exploded perspective view illustrating an aperture device according to the present embodiment, FIG. 4 is an exploded perspective view illustrating an aperture device according to the present embodiment, FIG. 5 is a cross-sectional view illustrating an aperture device according to the present embodiment, FIG. 6 is a perspective view illustrating a first cover member and a first guide member according to the present embodiment, FIG. 7 is a perspective view illustrating a first cover member and first and second guide members according to the present embodiment, FIG. 8 is an enlarged cross-sectional view illustrating area A of FIG. 7, FIG. 9 is an exploded perspective view illustrating a fixed assembly according to the present embodiment, FIG. 10 is a perspective view illustrating a fixed assembly according to the present embodiment, FIG. 11 is a cross-sectional view illustrating a coil according to the present embodiment, cut perpendicular to the optical axis, FIG. 12 is an exploded perspective view illustrating a moving assembly according to the present embodiment, FIG. 13 is a perspective view illustrating a magnet support member according to the present embodiment, FIG. 14 is a perspective view illustrating a magnet support member according to the present embodiment, viewed from another angle, FIG. 15 is a perspective view illustrating a blade part according to the present embodiment, FIG. 16 is a perspective view illustrating a blade part according to the present embodiment, separated into two layers, FIG. 17 is a view illustrating the rotational motion of a blade part according to the present embodiment, FIGS. 18 and 19 are perspective views illustrating a blade part according to the present embodiment, viewed from different angles, FIG. 20 is a view illustrating a blade hole of an aperture device according to the present embodiment, and FIG. 21 is a perspective view illustrating a fixed assembly, a blade part, and a magnet combined according to the present embodiment.

The aperture device 1000 may be an aperture. The aperture device 1000 can control the amount of light passing through the lens. The aperture device 1000 can control the amount of light incident on the image sensor 75. The aperture device 1000 can control the size of the hole through which light passes.

The aperture device 1000 can be disposed on the lens. The aperture device 1000 can be disposed on the lens. The aperture device 1000 can be coupled to the lens. The aperture device 1000 can be fixed to the lens. The aperture device 1000 can move integrally with the lens. The aperture device 1000 can move together with the lens. The aperture device 1000 can move in the optical axis direction together with the lens.

The aperture device 1000 may include a fixed assembly 200. The fixed assembly 200 may be a stator. The fixed assembly 200 may be a relatively fixed part with respect to the moving assembly 300. The fixed assembly 200 may movably support the moving assembly 300.

The aperture device 1000 may include a moving assembly 300. The moving assembly 300 may be a rotor. The moving assembly 300 may be a rotating body. The moving assembly 300 may be a movable part. The moving assembly 300 may be a moving device. The moving assembly 300 may be a mover. The moving assembly 300 may be a carrier.

The moving assembly 300 can be disposed on the fixed assembly 200. The moving assembly 300 can be movably disposed on the fixed assembly 200. The moving assembly 300 can be rotatably disposed on the fixed assembly 200. The moving assembly 300 can move the blade part 400. The moving assembly 300 can move together with the blade part 400.

The aperture device 1000 may include a first cover member 110. The first cover member 110 may have a ring shape including an opening. The first cover member 110 may include a side plate 111 and a curved part 112 extending from the side plate 111. The first cover member 110 may be disposed on the fixed assembly 200. The first cover member 110 may be disposed on the moving assembly 300.

The first cover member 110 may include a recessed part 113 that is recessed in one direction from the side plate 111. The recessed part 113 may be an area through which the substrate 250 passes to connect with the exterior of the aperture device 1000. The recessed part 113 may be recessed in a shape corresponding to the shape of the substrate 250. In the first cover member 110, the curved part 112 may be formed in one direction of the side plate 111, and the recessed part 113 may be formed in the other direction of the side plate 111.

The aperture device 1000 may include a first guide member 120 disposed on a first cover member 110. The first guide member 120 may be disposed on an inner surface of the first cover member 110. The first guide member 120 may be disposed between a curved part 112 and a side plate 111 on the inner side of the first cover member 110. The first guide member 120 may be fitted between the curved part 112 and the side plate 111 on the inner side of the first cover member 110. The first guide member 120 may be fixed to the inner surface of the first cover member 110 with an adhesive. The first guide member 120 may have a ring shape including an opening.

The first guide member 120 may include a first guide groove 121. The first guide groove 121 may be formed on one surface of the first guide member 120. The first guide groove 121 may include a plurality of first guide grooves 121 that are spaced apart from each other. The first guide groove 121 may be formed by being recessed into the inner peripheral surface 124 of the first guide member 120. The first guide groove 121 may include a first surface 122 that forms an incline with the inner peripheral surface 124 of the first guide member 120, and a second surface 123 that is connected to the first surface 122 and parallel to the inner peripheral surface 124. The first guide groove 121 may include two side surfaces that are connected to the first surface 122 and the second surface 123 and connected to the inner peripheral surface 124.

The fixed assembly 200 may include a housing 210. The housing 210 may be plate-shaped. The housing 210 may have a ring-shape including an opening. The housing 210 may be disposed below the substrate 250. The housing 210 may be disposed below the second guide member 220. The housing 210 may be disposed below the first cover member 110. The housing 210 may be disposed below the moving assembly 300. The housing 210 may be shielded with a shielding coating. This may concentrate the magnetic flux from the magnet 330 toward the coil 230 and prevent magnetic flux leakage.

One surface of the housing 210 may include a plurality of first protrusions 211 spaced apart from each other. The plurality of first protrusions 211 may be formed spaced apart from each other along a peripheral direction. A plurality of first protrusions 211 may be disposed closer to the opening than the outer surface of the housing 210. The plurality of first protrusions 211 may be formed at equal intervals on the upper surface of the housing 210. A first hole 403 of the blade part 400 may be inserted into each of the plurality of first protrusions 211. The first hole 403 of the blade part 400 may be formed larger than the plurality of first protrusions 211.

The fixed assembly 200 may include a first driving part 230. The first driving part 230 may be a coil 230. The coil 230 may include a plurality of coils 230 spaced apart from each other. The coil 230 may have a ring shape. The coil 230 may be a FP coil. The coil 230 may be disposed on the housing 210. The coil 230 may include a plurality of coils 230 spaced apart from each other. The plurality of coils 230 may be connected to each other by wires.

The fixed assembly 200 may include a sensor 240 disposed on the coil 230. The coil 230 may be electrically connected to a substrate 250. The sensor 240 may detect a magnet 330. The sensor 240 may be a Hall sensor. The sensor 240 may be an MR sensor. The sensor 240 may detect the magnetic force of the magnet 330. The sensor 240 may be disposed at the position corresponding to the magnet 330. The sensor 240 may overlap the magnet 330 in the optical axis direction. Control of the blade part 400 may be fed back in real time through the position of the magnet 330 detected by the sensor 240. In other words, the blade part 400 may be feedback-controlled in real time by the sensor 240.

The sensor 240 may be disposed in a sensor hole 231 formed on the coil 230. The sensor hole 231 may be formed to a size corresponding to the sensor 240. The coil 230 may be a self-bonding coil. The coil 230 includes a core 232, a first coil layer 233 disposed on one side of the core 232, a second coil layer 234 disposed on the other side of the core 232, and an adhesive 235 may be disposed between the core 232 and the first coil layer 233 and between the core 232 and the second coil layer 234.

The core 232 may be a support member for supporting the first coil layer 233 and the second coil layer 234. The core 232 may be a flexible printed circuit board. The core 232 may be made of a polyimide material. Each of the first coil layer 233 and the second coil layer 234 may be made of two coil pattern layers. This is merely exemplary and is not particularly limited thereto.

The sensor 240 may be disposed in a sensor hole 231 formed between the first coil layer 233 and the sensor. The upper surface of the sensor 240 may not form a step with the upper surface of the first coil layer 233. The sensor 240 disposed in the sensor hole 231 may be fixed using an adhesive. A sensor pattern 236 may be disposed on the core 232 to apply electricity to the sensor 240 or transmit a sensing signal to the outside. The sensor pattern 236 may be disposed between the first coil layer 233 and the core 232 and connected to the sensor 240. The sensor pattern 236 may be connected to a substrate 250.

The fixing assembly 200 may include the substrate 250. The substrate 250 may be connected to any one of the plurality of coils 230. The substrate 250 may be a flexible printed circuit board (FPCB). The substrate 250 can supply electricity to the coil 230 and the sensor 240 through an external power supply of the aperture device 1000.

The fixed assembly 200 may include a second guide member 220. The aperture device 1000 may include a second guide member 220 disposed on the first cover member 110. The second guide member 220 may be disposed on the fixed assembly 200. The second guide member 220 may be disposed on the housing 210. The second guide member 220 may be disposed on the inner surface of the first cover member 110. The second guide member 220 may be disposed on the lower end of the first guide member 120. The second guide member 220 may be disposed spaced apart from the first guide member 120. The second guide member 220 may be coupled to the first guide member 120. The upper surface of the second guide member 220 may be disposed to face the lower surface of the first guide member 120. The second guide member 220 may be secured to the inner surface of the first cover member 110 using an adhesive. The second guide member 220 may be secured to the housing 210 using an adhesive. The second guide member 220 may have a ring shape including an opening.

The second guide member 220 may include a second guide groove 221. The second guide groove 221 may be formed on one surface of the second guide member 220. The second guide groove 221 may include a plurality of second guide grooves 221 spaced apart from each other. The second guide groove 221 may be formed at a position facing the first guide groove 121. The second guide groove 221 may be formed as an inclined surface connecting the upper surface and the inner peripheral surface of the second guide member 220. The second guide groove 221 may include two side surfaces connecting the inclined surface, the upper surface, and the inner peripheral surface.

A ball 500 may be disposed in the first guide groove 121 and the second guide groove 221. The first guide groove 121 and the second guide groove 221 may face the third guide groove 322 of the magnet support member 320. The first guide groove 121 of the first guide member 120, the second guide groove 221 of the second guide member 220, and the third guide groove 322 of the magnet support member 320 may form a space in which the ball 500 is disposed. The first guide groove 121, the second guide groove 221, and the third guide groove 322 may support the rotation of the ball 500.

The moving assembly 300 may be ring-shaped. The moving assembly 300 may have a shape including an opening. The moving assembly 300 may include a third driving part 330. The third driving part 330 may be a magnet 330. The moving assembly 300 may include a second cover member 310, a magnet support member 320, and a magnet 330.

The second cover member 310 may be disposed on the magnet support member 320. The second cover member 310 may have a ring shape including an opening. The second cover member 310 may be disposed to cover the magnet 330 disposed on the magnet support member 320. The magnet support member 320 may be shielded with a shielding coating. This allows the magnetic flux from the magnet 330 to be concentrated toward the coil 230 and prevents magnetic flux leakage.

The magnet support member 320 may be a ring shape including an opening. The magnet support member 320 may include a support plate 323 connected to the opening. The support plate 323 may include a recessed part 324 that is recessed on one surface connected to the opening. The support plate 323 may include a protrusion 325 on the other surface connected to the opening. The recessed part 324 may be formed on the upper surface of the support plate 323, and the protrusion 325 may be formed on the lower surface of the support plate 323. The recessed part 324 of the support plate 323 may reduce the thickness of the area adjacent to the opening of the aperture device 1000. The protrusion 325 of the support plate 323 can prevent tilting of the blade part 400 by reducing the distance between the housing 210 of the fixed assembly 200 and the blade part 400 when combined with the blade part 400.

The lower surface of the magnet support member 320 may include a plurality of second protrusions 326 spaced apart from each other. The plurality of second protrusions 326 may be formed on the protrusion 325 of the support plate 323. The plurality of second protrusions 326 may be formed spaced apart from each other along the peripheral direction. The plurality of second protrusions 326 may be formed at equal intervals on the lower surface of the magnet support member 320. The number of the plurality of second protrusions 326 may be formed according to the number of blade parts 400. A second hole 402 of the blade part 400 can be inserted into each of the plurality of second protrusions 326. The second hole 402 of the blade part 400 can be formed larger than the second protrusion 326 of the moving assembly 300.

The magnet support member 320 may include a magnet hole 321 to which a magnet 330 is coupled. The magnet hole 321 may include a plurality of magnet holes 321 spaced apart from each other along a peripheral direction. The plurality of magnet holes 321 may include four magnet holes 321. The magnet holes 321 may have a shape corresponding to the shape of the magnet 330.

The magnet 330 may have a circular arc shape. The magnet 330 may be coupled to the magnet hole 321. The magnet 330 may include four magnets that are bipolarly magnetized. The magnet 330 may include a north pole and a south pole. The magnet 330 may be magnetized with two polarities along the peripheral direction. Since the magnet, when implemented as a single ring, may break due to external impact or during the polarization process, the magnet 330 may be formed in a circular arc shape and disposed peripherally on the magnet support member 320.

A chamfered surface may be formed at the corner of the magnet 330. The corner of the magnet 330 may be curved. The magnet 330 may be disposed in the magnet hole 321 and secured with an adhesive. By forming a curvature at the corner of the magnet 330, a space for adhesive to be disposed may be formed between the magnet hole 321 and the magnet 330. The magnet 330 and the magnet support member 320 may be inserted into a mold. Insert molding is a type of plastic injection molding process that involves pre-disposing components in an injection mold and then injecting plastic onto the components to create an integrated product.

A third guide groove 322 may be formed on the outer surface of the magnet support member 320. A ball 500 may be disposed in the third guide groove 322. The third guide groove 322 may face the first guide groove 121 of the first guide member 160 and the second guide groove 221 of the second guide member 260. The third guide groove 322, the first guide groove 121 of the first guide member 160, and the second guide groove 221 of the second guide member 260 may form a space in which the ball 500 is disposed. The ball 500 may be disposed in the space formed by the first to third guide grooves 121, 221, 322 to guide the rotation of the magnet support member 320.

The aperture device 1000 may include a blade part 400. The blade part 400 may be a member that blocks light. The blade part 400 may be a light-blocking member. The blade part 400 may be disposed on the fixed assembly 200. The blade part 400 may be disposed on the housing 210 of the fixed assembly 200. The blade part 400 may be disposed on the moving assembly 300. The blade part 400 may be disposed on the magnet support member 320. The blade part 400 may move together with the moving assembly 300. In other words, when the moving assembly 300 moves, the blade part 400 may also move together.

The blade part 400 may include a first hole 403 into which the first protrusion 211 of the fixed assembly 200 is inserted. The blade part 400 may include a first hole 403 into which the first protrusion 211 of the housing 210 is inserted. The blade part 400 may include a second hole 402 into which the second protrusion 326 of the moving assembly 300 is inserted. The blade part 400 may include a second hole 402 into which the second protrusion 326 of the magnet support member 320 is inserted. The first hole 403 may be formed larger than the second hole 402. The first hole 403 may be formed in an oval shape, and the second hole 402 may be formed in a circular shape.

When the moving assembly 300 moves, the blade part 400 may pivot relative to the fixed assembly 200. The blade part 400 may rotate and move linearly at the portion where the blade part meets the fixed assembly 200. The blade part 400 can move linearly at the portion where the blade part meets the moving assembly 300.

The line connecting the second hole 402 of the blade part 400 may be circular. The magnet support member 320 may rotate when the second protrusion 326 of the magnet support member 320 is inserted into the second hole 402 of the blade part 400. When the magnet support member 320 rotates, the relative position of the first protrusion 211 of the housing 210 within the first hole 403 of the blade part 400 may change. For example, when the magnet support member 320 rotates, the relative position of the first protrusion 211 of the housing 210 may change from a state of being in contact with one end of the first hole 403 of the blade part 400 to a state of being in contact with the other end.

The rotation angle of the blade part 400 based on the second hole 402 of the blade part 400 can satisfy a range of 0 to 6 degrees. The angle a formed by the line P1 that touches the first hole 403 of the blade part 400 from the center 0 of the second hole 402 of the blade part 400 at the initial position of the blade part 400 and the line P2 that touches the first hole 403 of the blade part 400 from the center 0 of the second hole 402 of the blade part 400 at the rotated position of the blade part 400 can satisfy a range of 0 to 6 degrees.

The blade part 400 may include an escape groove 405 on a surface connected to the inner peripheral surface of the blade part 400. The escape groove 405 may be an area for avoiding the second protrusion 326 of the magnet support member 320. The radius of curvature of the escape groove 405 may be larger than the radius of curvature of the second protrusion 326 of the magnet support member 320. The radius of curvature of the escape groove 405 may be larger than the radius of curvature of the second hole 402 of the blade part 400. The blade part 400 may prevent contact and collision with the second protrusion 326 through the escape groove 405, thereby increasing the rotational radius of the blade part 400 and reducing the size of the minimum opening of the blade hole 401 formed by the blade part 400. Additionally, the initialization reference position before the aperture device 1000 operates may refer to a state where the second protrusion of a blade is seated in the escape groove of another blade.

As the overlapping area of a plurality of blades increases, the distance between the escape groove 405 of one blade among adjacently disposed blades and the second hole 402 of the remaining blades may decrease. As the overlapping area of a plurality of blades increases, the distance between the escape groove 405 of one blade among adjacently disposed blades and the second protrusion 326 that engages the remaining blades may decrease.

For example, the first blade 410 and the sixth blade 460 may overlap, and as the overlapping area of a plurality of blades increases, the distance between the escape groove 405 of the first blade 410 and the second hole 402 of the second blade 460 may decrease. As the overlapping area of the plurality of blades increases, the distance between the escape groove 405 of the first blade 410 and the second protrusion 326 that engages the second hole 402 of the second blade 460 can become closer.

The aperture device 1000 may include a hole 401. The hole 401 may be referred to as a blade hole. The blade part 400 may include a hole 401 formed by a plurality of blade parts 400. The size or shape of the hole 401 may be changed by the plurality of blade parts 400. Light may pass through the hole 401.

The blade part 400 may include a plurality of blades. The blade part 400 may include first to sixth blades 410, 420, 430, 440, 450, 460. The first to sixth blades 410, 420, 430, 440, 450, 460 may have the same shape. At least one area of the plurality of blades may be disposed to overlap in the optical axis direction. The plurality of blades may form a hole 401 whose size changes according to the movement of the moving assembly 300. The size of the hole 401 may decrease as the overlapping area of the plurality of blades increases. The size of the hole 401 may increase as the overlapping area of the plurality of blades decreases. The hole 401 may be formed by the inner peripheral surface 404 of the plurality of blades.

The plurality of blades may be disposed separately in two layers. The first to sixth blades 410, 420, 430, 440, 450, 460 may be disposed separately in two layers. The first blade 410, the third blade 430, and the fifth blade 450 may be disposed on the same plane in one layer. The second blade 420, the fourth blade 440, and the sixth blade 460 may be disposed on the same plane in one layer. The plurality of blades may be disposed in two layers, and the first blade 410, the third blade 430, and the fifth blade 450 may be disposed on the upper layer of the two layers, while the second blade 420, the fourth blade 440, and the sixth blade 460 may be disposed on the lower layer.

The first blade 410, the third blade 430, and the fifth blade 450 may not overlap due to the rotation of the magnet support member 320. When the opening formed by the first blade 410, the third blade 430, and the fifth blade 450 is at a minimum, the first blade 410, the third blade 430, and the fifth blade 450 may not overlap in the optical axis direction.

The second blade 420, the fourth blade 440, and the sixth blade 460 may not overlap due to the rotation of the magnet support member 320. When the opening formed by the second blade 420, the fourth blade 440, and the sixth blade 460 is at a minimum, the second blade 420, the fourth blade 440, and the sixth blade 460 may not overlap in the optical axis direction.

The blade part 400 may include an inner peripheral surface 404. The inner peripheral surface 404 may form a hole 401 through which light passes. The blade part 400 may include an inner peripheral surface 404 that forms the hole 401. The inner peripheral surface 404 may be an inner surface. The inner peripheral surface 404 may be an inner surface. The inner peripheral surface 404 of the blade part 400 may include a plurality of circular arc areas and a plurality of flat areas. For example, the blade part 400 may include four circular arc areas, one flat area, and one interpolation area.

The inner peripheral surface 404 of the blade part 400 may include a first circular arc area 404a having a circular arc shape with a first radius of curvature r1. When viewed along the optical axis, the inner peripheral surface 404 of the blade part 400 may include a first circular arc area 404a having a circular arc shape with a first radius of curvature r1. The first circular arc area 404a may be disposed between a surface other than the inner peripheral surface 404 of the blade part 400 and a second circular arc area 404b of the inner peripheral surface 404 of the blade part 400.

The inner peripheral surface 404 of the blade part 400 may include a second circular arc area 404b having a circular arc shape with a second radius of curvature r2. When viewed in the optical axis direction, the inner peripheral surface of the blade part 400 may include a second circular arc area 404b having a circular arc shape with a second radius of curvature r2. The second circular arc area 404b may be disposed between the first circular arc area 404a and the flat area 404c.

The inner peripheral surface 404 of the blade part 400 may include a third circular arc area 404d having a third radius of curvature r3. When viewed along the optical axis, the inner peripheral surface of the blade part 400 may include a third circular arc area 404d having a third radius of curvature r3. The third circular arc area 404d may be disposed between the flat area 404c and the fourth circular arc area 404e.

The inner peripheral surface 404 of the blade part 400 may include a fourth circular arc area 404e having a fourth radius of curvature r4. When viewed along the optical axis, the inner peripheral surface of the blade part 400 may include a fourth circular arc area 404e having a fourth radius of curvature r4. The fourth circular arc area 404e may be disposed between the third circular arc area 404d and the interpolation area 404f. The fourth circular arc area 404e may be disposed between the third circular arc area 404d and a surface other than the inner peripheral surface 404 of the blade part 400.

The inner peripheral surface 404 of the blade part 400 may include a flat area 404c disposed between the second circular arc area 404b and the third circular arc area 404d. When viewed along the optical axis, the inner peripheral surface 404 of the blade part 400 may include a flat area 404c disposed between the second circular arc area 404b and the third circular arc area 404d. The flat area 404c may be formed as a flat surface.

The inner peripheral surface 404 of the blade part 400 may include an interpolation area 404f connecting the fourth circular arc area 404e and a surface other than the inner peripheral surface 404 of the blade part 400. When viewed in the optical axis direction, the inner peripheral surface 404 of the blade part 400 may include an interpolation area 404f connecting the fourth circular arc area 404e and a surface other than the inner peripheral surface 404 of the blade part 400. The interpolation area 404f may be formed as a curved surface. The interpolation area 404f may be formed as a plane.

The inner peripheral surface 404 of the blade part 400 may include a first circular arc area 404a, a second circular arc area 404b, a plane area 404c, a third circular arc area 404d, and a fourth circular arc area 404e from one direction to the other. The inner peripheral surface 404 of the blade part 400 may include a first circular arc area 404a, a second circular arc area 404b, a plane area 404c, a third circular arc area 404d, a fourth circular arc area 404e, and an interpolation area 404f from one direction to the other. The first circular arc area 404a and the interpolation area 404f of the inner peripheral surface 404 of the blade part 400 may be connected to a surface other than the inner peripheral surface 404 of the blade part 400.

The first circular arc area 404a and the second circular arc area 404b of the inner peripheral surface 404 of the blade part 400 may be closer to the escape groove 405 than the second hole 402 of the blade part 400. The third circular arc area 404d and the fourth circular arc area 404e of the inner peripheral surface 404 of the blade part 400 may be closer to the second hole 402 than the escape groove 405 of the blade part 400.

The first radius of curvature r1 of the first circular arc area 404a may be larger than the second radius of curvature r2 of the second circular arc area 404b. The first radius of curvature r1 of the first circular arc area 404a may be smaller than the third radius of curvature r3 of the third circular arc area 404d and the fourth radius of curvature r4 of the fourth circular arc area 404e. The second radius of curvature r2 of the second circular arc area 404b may be smaller than the first radius of curvature r1 of the first circular arc area 404a, the third radius of curvature r3 of the third circular arc area 404d, and the fourth radius of curvature r4 of the fourth circular arc area 404e. The third radius of curvature r3 of the third circular arc area 404d may be greater than the first radius of curvature r1 of the first circular arc area 404a and the second radius of curvature r2 of the second circular arc area 404b. The third radius of curvature r3 of the third circular arc area 404d may be smaller than the fourth radius of curvature r4 of the fourth circular arc area 404e. The fourth radius of curvature r4 of the fourth circular arc area 404e may be greater than the first radius of curvature r1 of the first circular arc area 404a, the second radius of curvature r2 of the second circular arc area 404b, and the third radius of curvature r3 of the third circular arc area 404d.

For example, the first radius of curvature r1 of the first circular arc area 404a may be about 1.18R. The second radius of curvature r2 of the second circular arc area 404b may be about 1.1R. The third radius of curvature r3 of the third circular arc area 404d may be 2R. The fourth radius of curvature r4 of the fourth circular arc area 404e may be 2.05R. The radius of curvature refers to the radius of a circle formed by a curve passing through a curved surface. Here, nR (n is a positive number) may refer to the radius of curvature of a circle with a radius of n mm. The values described may have a difference of ±5% due to manufacturing error.

Among the first circular arc areas 404a to the fourth circular arc areas 404e in the longitudinal direction of the inner peripheral surface 404 of the blade part 400, the first circular arc area 404a may have the smallest length. The area with the smallest length in the longitudinal direction of the inner peripheral surface 404 of the blade part 400 may be the interpolation area 404f. Among the first circular arc areas 404a to the fourth circular arc areas 404e in the longitudinal direction of the inner peripheral surface 404 of the blade part 400, the third circular arc area 404d may have the largest length. The area with the largest length in the longitudinal direction of the inner peripheral surface 404 of the blade part 400 may be the third circular arc area 404d.

The length of the flat area 404c in the longitudinal direction of the inner peripheral surface 404 of the blade part 400 may be smaller than the lengths of the second circular arc area 404b and the third circular arc area 404d. The length of the interpolation area 404f in the longitudinal direction of the inner peripheral surface 404 of the blade part 400 may be smaller than the lengths of the first circular arc area 404a to the fourth circular arc area 404e and the flat area 404c.

Among the circular arc areas of the inner peripheral surface 404 of the blade part 400, the circular arc area with the smallest radius of curvature may be connected to the flat area 404c. Among the circular arc areas of the inner peripheral surface 404 of the blade part 400, the circular arc area with the largest length in the longitudinal direction of the inner peripheral surface 404 of the blade part 400 may be connected to the flat area 404c. The length of the flat area 404c in the longitudinal direction of the inner peripheral surface 404 of the blade part 400 may be greater than the length of the first circular arc area 404a having the shortest length among the plurality of circular arc areas. The length of the flat area 404c in the longitudinal direction of the inner peripheral surface 404 of the blade part 400 may be less than the length of the third circular arc area 404d having the longest length among the plurality of circular arc areas. The length of the flat area 404c in the longitudinal direction of the inner peripheral surface 404 of the blade part 400 may be less than the length of the second circular arc area 404b connected to the flat area 404c and the length of the third circular arc area 404d.

When current is applied to the coil of the aperture device 1000, the blade part 400 can move. In other words, when current is applied to the coil of the aperture device 1000 and the moving assembly 300 moves, the shape of the hole 401 formed by the blade part 400 can be changed. In other words, the F-number of the aperture device 1000 can be changed by applying current to the coil.

The rotation angle of the blade part 400 with respect to the second hole 402 of the blade part 400 can be within a range of 0 to 6 degrees. Within the rotation angle range of 0 to 6 degrees, the rotation angle per step can be 0.5 degrees. The aperture device 1000 can rotate in 13 steps, each step being 0.5 degrees.

In step 1, where the rotation angle of the blade part 400 is 0 degrees, the hole 401 of the blade part 400 may be circular. In step 2, where the rotation angle of the blade part 400 is 0.5 degrees, the hole 401 of the blade part 400 may be circular. In step 3, where the rotation angle of the blade part 400 is 1 degree, the hole 401 of the blade part 400 may be circular. In step 12, where the rotation angle of the blade part 400 is 5.5 degrees, the hole 401 of the blade part 400 may be circular. In step 13, where the rotation angle of the blade part 400 is 6 degrees, the opening of the magnet support member 320 is larger than the hole 401 formed by the blade part 400, and therefore, the opening of the magnet support member 320 may function as a blade hole.

As the blade part 400 rotates, the hole 401 of the blade part 400 can be formed into a perfect circle in 5 of the 13 steps. The closer the shape of the blade hole is to a circle, the better the diffraction (light splitting) quality. This allows for optimized depth expression even on large image sensors.

When the magnet support member 320 rotates, the minimum diameter of the hole 401 of the blade part 400 can be approximately 2.2 mm, and the maximum diameter of the hole 401 of the blade part 400 can be approximately 4.0 mm. In step 1 where the rotation angle of the blade part 400 is 0 degrees, the diameter of the hole 401 of the blade part 400 can be approximately 2.2 mm. In step 12 where the rotation angle of the blade part 400 is 5.5 degrees, the diameter of the hole 401 of the blade part 400 may be approximately 4.0 mm. The opening of the magnet support member 320 may be larger than the maximum diameter of the hole 401 of the blade part 400. The opening of the magnet support member 320 may be approximately 4.1 mm. The numerical values described may differ by ±5% due to manufacturing errors.

In step 1 where the rotation angle of the blade part 400 is 0 degrees, the hole 401 of the blade part 400 may be formed by the second circular arc area 404b of the blade part 400. In step 2, where the rotation angle of the blade part 400 is 0.5 degrees, the hole of the blade part 400 can be formed by the second circular arc area 404b and the flat area 404c of the blade part 400. In step 3, where the rotation angle of the blade part 400 is 1 degree, the hole 401 of the blade part 400 can be formed by the first circular arc area 404a and the second circular arc area 404b of the blade part 400. In step 12, where the rotation angle of the blade part 400 is 5.5 degrees, the hole 401 of the blade part 400 can be formed by the third circular arc area 404d of the blade part 400. In step 12 where the rotation angle of the blade part 400 is 5.5 degrees, the hole 401 of the blade part 400 can be formed by the third circular arc area 404d and the fourth circular arc area 404e of the blade part 400.

Hereinafter, the configuration of a camera device according to the present embodiment will be described with reference to the drawing.

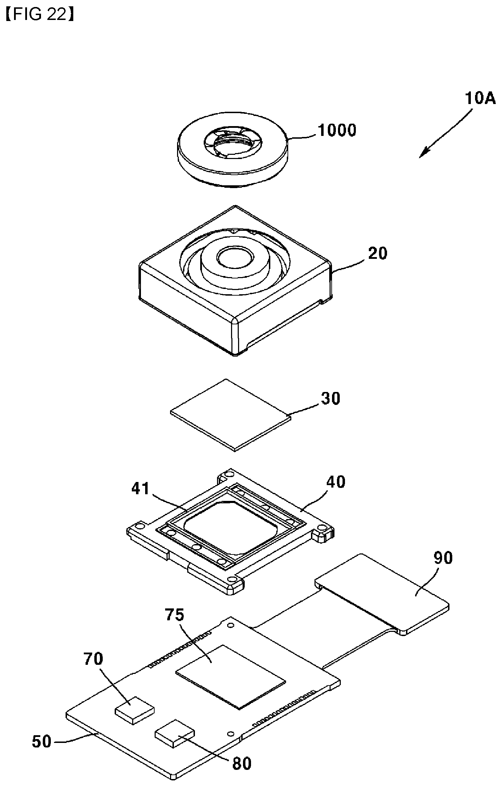

FIG. 22 is a perspective view illustrating a camera device according to the present embodiment.

The camera device 10 may include a lens module. The lens module may include at least one lens. The lens may be disposed at a position corresponding to the image sensor 75. The lens module may include a lens and a lens barrel. The lens module may be coupled to a holder of the lens driving device 200. The lens module may be coupled to the holder by screws and/or adhesive. The lens module may be moved integrally with the holder.

The camera device 10 may include a filter 30. The filter 30 may serve to block light of a specific frequency band from passing through the lens module from entering the image sensor 75. The filter 30 may be disposed parallel to the x-y plane. The filter 30 may be disposed between the lens module and the image sensor 75. The filter 30 may be disposed on the sensor base 40. As a modified example, the filter 30 may be disposed on the base 210 of the lens driving device 200. The filter 30 may include an infrared filter. The infrared filter may block light in the infrared area from being incident on the image sensor 75.

The camera device 10 may include a sensor base 40. The sensor base 40 may be disposed between the lens driving device 200 and a printed circuit board 50. The sensor base 40 may include a protrusion 41 on which a filter 30 is disposed. An opening may be formed in the portion of the sensor base 40 where the filter 30 is disposed so that light passing through the filter 30 may enter the image sensor 75.

The camera device 10 may include a printed circuit board (PCB) 50. The printed circuit board 50 may be a substrate or a circuit board. The lens driving device 200 may be disposed on the printed circuit board 50. The sensor base 40 may be disposed between the printed circuit board 50 and the lens driving device 200. A printed circuit board 50 may be electrically connected to a lens driving device 200. An image sensor 75 may be disposed on the printed circuit board 50. The printed circuit board 50 may be equipped with various circuits, elements, control parts, or the like to convert an image formed on the image sensor 75 into an electrical signal and transmit it to an external device.

The camera device 10 may include an image sensor 75. The image sensor 75 may be configured to form an image by incident light passing through a lens and a filter 30. The image sensor 75 may be mounted on the printed circuit board 50. The image sensor 75 may be electrically connected to the printed circuit board 50. For example, the image sensor 75 may be coupled to the printed circuit board 50 using surface mounting technology (SMT). As another example, the image sensor 75 can be coupled to a printed circuit board 50 using flip chip technology.

The image sensor 75 may be disposed so that the optical axis thereof aligns with the optical lens of the lens. In other words, the optical axis of the image sensor 75 and the optical axis of the lens may be aligned. The image sensor 75 may convert light irradiated onto the effective image area of the image sensor 75 into an electrical signal. The image sensor 75 may be any one of a charge coupled device (CCD), a metal oxide semiconductor (MOS), a CPD, and a CID.

The camera device 10 may include a motion sensor 70. The motion sensor 70 may be mounted on a printed circuit board 50. The motion sensor 70 may be electrically connected to the control part 80 through a circuit pattern provided on the printed circuit board 50. The motion sensor 70 may output rotational angular velocity information due to the movement of the camera device 10. The motion sensor 70 may include a two-axis or three-axis gyro sensor or an angular velocity sensor.

The camera device 10 may include a control part 80. The control part 80 may be disposed on a printed circuit board 50. The control part 80 may be electrically connected to the coil 230 of the lens driving device 200. The control part 80 may individually control the direction, intensity, amplitude, or the like of the current supplied to the coil 230. The control part 80 may control the lens driving device 200 to perform an autofocus function and/or an image stabilization function. Furthermore, the control part 80 may perform autofocus feedback control and/or image stabilization feedback control for the lens driving device 200.

The camera device 10 may include a connector 90. The connector 90 may be electrically connected to the printed circuit board 50. The connector 90 may include a port for electrical connection with an external device.

The following describes the configuration of an optical device according to the present embodiment with reference to the drawings.

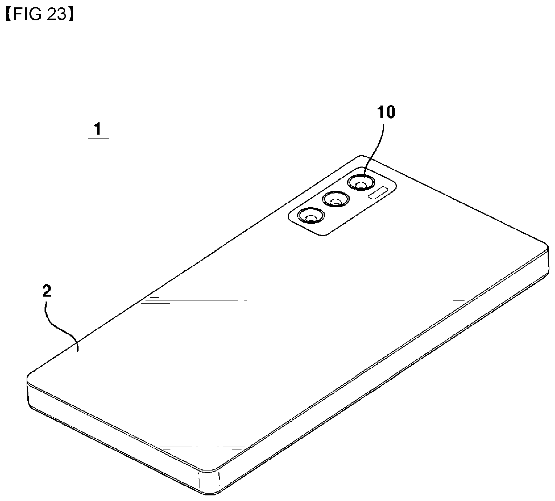

FIG. 23 is a perspective view illustrating the optical device according to the present embodiment.

The optical device 1 may include one or more of a mobile phone, a cellular phone, a portable terminal, a mobile terminal, a smart phone, a smart pad, a portable smart device, a digital camera, a laptop computer, a digital broadcasting terminal, a Personal Digital Assistant (PDA), a Portable Multimedia Player (PMP), and a navigation system. The optical device 1 may include any device for capturing images or photographs.

An optical device 1 may include a main body 2. The optical device 1 may include a camera device 10. The camera device 10 may be disposed on the main body 2. The camera device 10 may capture a subject. The optical device 1 may include a display. The display may be disposed on the main body 2. The display may output one or more of a video or image captured by the camera device 10. The display may be disposed on a first surface of the main body 2. The camera device 10 may be disposed on one or more of the first surface of the main body 2 and a second surface opposite the first surface. The camera device 10 may have a triple camera disposed in a vertical direction. Alternatively, the camera device 10 may have a triple camera disposed in a horizontal direction.

A person having ordinary knowledge in the technical field related to this embodiment will appreciate that the present embodiment can be implemented in modified forms without departing from the essential characteristics of the above-described disclosure. Therefore, the disclosed methods should be considered illustrative rather than limiting. The scope of the present disclosure is set forth in the claims, not the foregoing description, and all differences within the scope equivalent thereto should be construed as being included in the present disclosure.

## Claims

1. An aperture device comprising:
a fixed assembly including a first driving part;
a moving assembly including a second driving part;
a blade part coupled to the fixed assembly and the moving assembly; and
a ball disposed between the fixed assembly and the moving assembly.

2. The aperture device of claim 1, further comprising:
a first cover member disposed on the fixed assembly; and
a first guide member disposed on an inside of the first cover member;
wherein a first guide member includes a first guide groove in which the ball is disposed.

3. The aperture device of claim 2,
wherein the fixing assembly includes a second guide member disposed below the first guide member, and
wherein the second guide member includes a second guide groove in which the ball is disposed.

4. The aperture device of claim 3,
wherein the moving assembly includes:
a plurality of magnets and a magnet support member in which the plurality of magnets are spaced apart from each other, and
a third guide groove in which the ball is disposed on the outer surface of the magnet support member.

5. The aperture device of claim 1,
wherein the first driving part includes:
a coil, and
a substrate connected to the coil.

6. An aperture device comprising:
a fixed assembly including a first driving part;
a moving assembly including a second driving part;
a blade part coupled to the fixed assembly and the moving assembly; and
a ball disposed between the fixed assembly and the moving assembly,
wherein the inner peripheral surface of the blade includes a circular arcuate area and a flat area.

7. The aperture device of claim 6,
wherein the circular arc area with the smallest radius of curvature among the inner peripheral surfaces of the blade is connected to the flat area.

8. The aperture device of claim 6,
wherein the area with the longest length in the longitudinal direction of the inner peripheral surface of the blade is connected to the flat area.

9. The aperture device of claim 6,
wherein the inner peripheral surface of the blade includes a first circular arc area, a second circular arc area, a flat area, a third circular arc area, and a fourth circular arc area from one direction to the other direction.

10. The aperture device of claim 6,
wherein the first to fourth circular arc areas have first to fourth radii of curvature, respectively, and
wherein the first to fourth radii of curvature are different from each other.
